# EUROPÄISCHE PATENTSCHRIFT

(11) **EP 3 279 412 B1**
(45) Veröffentlichungstag und Bekanntmachung des Hinweises auf die Patenterteilung: **10.07.2019**
(21) Anmeldenummer: 17183357.7
(22) Anmeldetag: 26.07.2017
(51) Int. Cl.: E05B 19/00, E05B 21/06

(54) **SCHLÜSSEL ODER SCHLÜSSELROHLING FÜR EINEN SCHEIBENZYLINDER, SOWIE ZUGEHÖRIGER SCHEIBENZYLINDER**
KEY OR KEY BLANK FOR A DISC CYLINDER, AND CORRESPONDING DISC CYLINDER
CLÉ OU ÉBAUCHE DE CLÉ POUR UN CYLINDRE COULISSANT ET CYLINDRE COULISSANT CORRESPONDANT

(30) Priorität: 01.08.2016 DE 102016114222
(43) Veröffentlichungstag der Anmeldung: 07.02.2018
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- WO-A1-2007/147934
- DE-A1- 2 817 966
- GB-A- 1 355 188
- NL-A- 7 012 705

## Beschreibung

Die vorliegende Erfindung betrifft einen Schließzylinder von der Bauart eines Scheibenzylinders mit einem zugehörigen Schlüssel oder Schlüsselrohling. Ein derartiger Schlüsselrohling ist dazu vorgesehen, durch Anbringen von mehreren axial zueinander versetzten Einschnitten - wie nachfolgend erläutert - einen Schlüssel für einen Scheibenzylinder herzustellen.

Ein derartiger Scheibenzylinder umfasst ein Zylindergehäuse, einen im Zylindergehäuse um eine Zylinderachse drehbar gelagerten Zylinderkern, der in diesem Zusammenhang auch als Scheibengehäuse bezeichnet wird, und wenigstens einen am Außenumfang des Scheibengehäuses vorgesehenen, parallel zur Zylinderachse ausgerichteten und radial zur Zylinderachse versetzbaren Sperrstift, welcher in einer radial äußeren Blockierstellung das Scheibengehäuse gegen eine Drehbewegung blockiert und in einer radial inneren Freigabestellung das Scheibengehäuse für eine Drehbewegung freigibt. Ferner umfasst ein derartiger Scheibenzylinder mehrere im Scheibengehäuse entlang der Zylinderachse angeordnete, zwischen einer Verriegelungsstellung und einer Entriegelungsstellung drehbar gelagerte Einstellscheiben, wobei jede Einstellscheibe eine Schlüsselaufnahmeöffnung und am Außenumfang wenigstens eine Sperrausnehmung aufweist, in welcher der Sperrstift in der Freigabestellung zumindest teilweise aufgenommen werden kann. Der Sperrstift kann nur dann in die Freigabestellung versetzt werden, wenn sich alle Einstellscheiben in ihrer Entriegelungsstellung befinden, in welcher die Sperrausnehmung der jeweiligen Einstellscheibe radial zu dem Sperrstift ausgerichtet ist.

Ein gattungsgemäßer Scheibenzylinder ist aus der DE 10 2011 015 314 A1 und aus der EP 0 712 979 B1 bekannt.

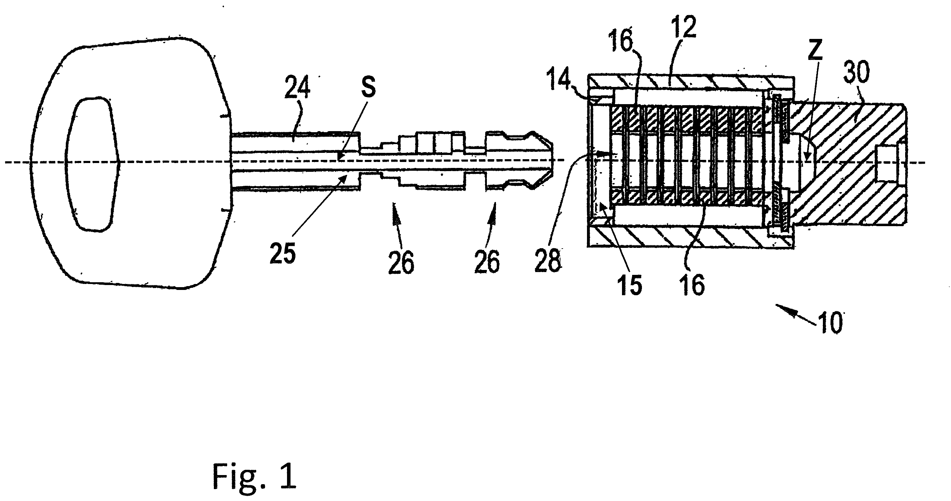

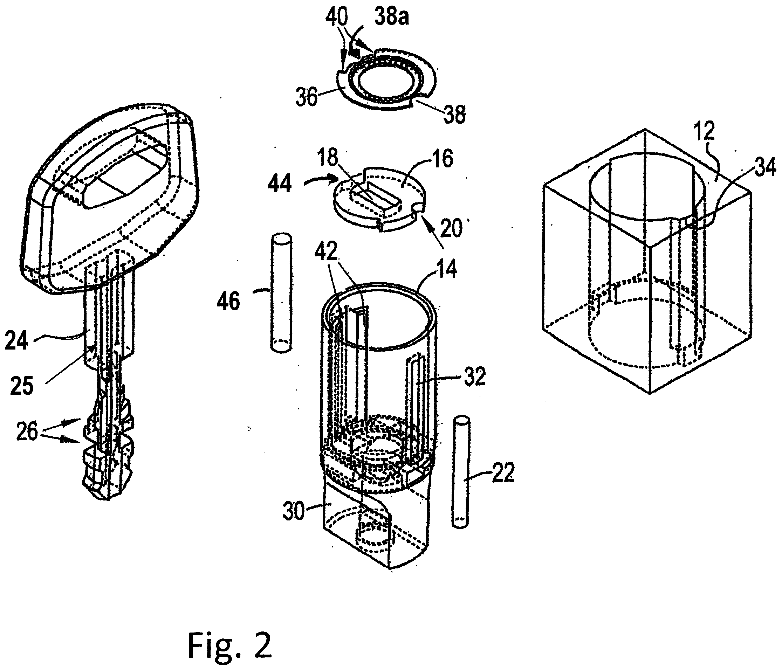

Gemäß Fig. 1 und 2 kann ein Scheibenzylinder 10 ein Zylindergehäuse 12 und einen im Zylindergehäuse 12 um eine Zylinderachse Z drehbar gelagerten Zylinderkern bzw. Scheibengehäuse 14 aufweisen. Die Drehbewegung des Scheibengehäuses 14 kann über einen mit dem Scheibengehäuse 14 verbundenen Kopplungsabschnitt 30 auf einen Verriegelungsmechanismus eines nicht dargestellten Schlosses übertragen werden, um das Schloss mittels des Scheibenzylinders 10 zu entriegeln oder zu verriegeln.

In dem Scheibengehäuse 14 sind hinter einer Sicherungsscheibe 15 entlang der Zylinderachse Z hintereinander mehrere drehbare Einstellscheiben 16, die auch als Zuhaltungsscheiben bezeichnet werden, aufgenommen. Die Einstellscheiben 16 besitzen jeweilige zentrale Aufnahmeöffnungen 18, welche gemeinsam einen Schlüsselkanal 28 zum Einführen eines Schlüssels 24 bilden und welche bei dem gezeigten Beispiel einen rechteckigen Querschnitt aufweisen. Die Einstellscheiben 16 besitzen ferner jeweilige Umfangsausnehmungen in Form von Sperrausnehmungen 20 zum Aufnehmen eines Sperrstifts 22, welcher parallel zu der Zylinderachse Z ausgerichtet ist.

Der Sperrstift 22 ist radial beweglich in einem in der Wandung des Scheibengehäuses 14 vorgesehenen Schlitz 32 aufgenommen. Wenn sich der Scheibenzylinder 10 in seiner Schließstellung befindet und damit die Einstellscheiben 16 in ihre Verriegelungsstellung gedreht sind, nimmt der Sperrstift 22 eine radial äußere Blockierstellung ein. In dieser Blockierstellung greift ein Teilabschnitt des Sperrstifts 22 in eine an der Innenwandung des Zylindergehäuses 12 vorgesehene Sperrstiftaufnahmevertiefung 34 ein, so dass das Scheibengehäuse 14 (abgesehen von einem geringfügigen Verdrehspiel) gegen eine Drehbewegung relativ zu dem Zylindergehäuse 12 blockiert ist.

Mittels des Schlüssels 24 können die Einstellscheiben 16 von ihrer Verriegelungsstellung in eine Entriegelungsstellung überführt werden. Wenn sich alle Einstellscheiben 16 in einer sogenannten Sortierendstellung befinden, die zwischen der Verriegelungsstellung und der Entriegelungsstellung liegt, dann sind die Sperrausnehmungen 20 aller Einstellscheiben 16 in Richtung der Zylinderachse Z gesehen fluchtend zueinander und radial zu dem Sperrstift 22 ausgerichtet. Hierdurch kann der Sperrstift 22 radial nach innen in seine Freigabestellung versetzt werden, in welcher er sich außerhalb der Sperrstiftaufnahmevertiefung 34 des Zylindergehäuses 12 befindet. Dadurch wird das Scheibengehäuse 14 für eine Drehbewegung relativ zu dem Zylindergehäuse 12 freigegeben, und das Scheibengehäuse 14 kann zusammen mit den Einstellscheiben 16 in Entriegelungsrichtung bis zum Erreichen der Entriegelungsstellung weitergedreht werden.

Am Außenumfang jeder Einstellscheibe 16 kann ferner eine Fixierausnehmung 44 zum Aufnehmen eines Kernstifts 46 vorgesehen sein. Der Kernstift 46 ist parallel zur Zylinderachse Z ausgerichtet und radial beweglich in einem in der Wandung des Scheibengehäuses 14 vorgesehenen Schlitz aufgenommen. In der Schließstellung des Scheibenzylinders 10 greift der Kernstift 46 in die Fixierausnehmungen 44 der Einstellscheiben 16 ein und verhindert somit ein Verdrehen der Einstellscheiben 16 zueinander, wenn kein Schlüssel 24 eingeführt ist.

Der dem Scheibenzylinder 10 zugeordnete Schlüssel 24 besitzt - ausgehend von einem entsprechenden Schlüsselrohling - an dem Schlüsselschaft 25 entlang der Schlüsselachse S mehrere unterschiedlich abgewinkelte Einschnitte 26, die verschiedenen Winkelpositionen der Sperrausnehmungen 20 der Einstellscheiben 16 entsprechen. Nach dem Einführen in den Schlüsselkanal 28 nimmt der Schlüssel 24 zunächst eine sogenannte Anfangsstellung ein, von der aus der Schlüssel 24 in Entriegelungsrichtung verdreht werden kann. Durch Verdrehen des Schlüssels 24 in Entriegelungsrichtung aus der Anfangsstellung heraus gelangt der Schlüssel 24 zunächst in eine sogenannte Nulllage, in welcher der Kernstift 46 außer Eingriff mit den Fixierausnehmungen 44 der Einstellscheiben 16 geraten kann und die Einstellscheiben 16 somit für eine Drehbewegung relativ zu dem Scheibengehäuse 14 freigegeben sind, um die Sperrausnehmungen 20 der Einstellscheiben 16 nacheinander in Flucht bringen zu können (sogenanntes Sortieren).

Die Einstellscheiben 16 weisen gegenüber dem jeweils zugeordneten Einschnitt 26 des Schlüssels 24 ein bestimmtes Verdrehspiel auf, dessen Maß von dem Winkelmaß des jeweiligen Einschnitts 26 abhängt, d.h. in Abhängigkeit von dem Winkelmaß der Einschnitte 26 gelangen Außenkanten oder Seitenkanten des Schafts 25 des Schlüssels 24 und korrespondierende Steuerabschnitte der zentralen Aufnahmeöffnungen 18 der zugeordneten jeweiligen Einstellscheiben 16 beim Sortieren zu unterschiedlichen Zeitpunkten bzw. in unterschiedlichen Winkelstellungen miteinander in Eingriff.

Beispielsweise beträgt ausgehend von der Nulllage der Einstellscheiben 16 der gesamte Rotationsweg des Schlüssels 24 bis zum Erreichen der Sortierendstellung aller Einstellscheiben 16 ca. 110°, d.h. nach einer Drehung des Schlüssels 24 um ca. 110° sind alle Einstellscheiben 16 sortiert und die Sperrausnehmungen 20 sind in radialer Flucht zu dem Sperrstift 22 ausgerichtet. Typischerweise ist für die möglichen Winkelpositionen der Sperrausnehmungen 20 ein Raster von sechs verschiedenen Winkelpositionen in gleichmäßiger Teilung vorgesehen, wobei der Winkelabstand zwischen zwei im Raster benachbarten Sperrausnehmungen 20 ca. 18° beträgt. Entsprechend gibt es für jede Einstellscheibe 16 sechs mögliche Kodierungen, wobei zum Einstellen einer dieser Kodierungen die jeweilige Einstellscheibe 16 um einen bestimmten Winkel aus ihrer Nulllage verdreht werden muss. Bei dem beispielhaften Scheibenzylinder 10 entspricht eine Kodierung "1" einer Drehung der Einstellscheibe 16 um ca. 20°, eine benachbarte Kodierung "2" einer Drehung von ca. 38°, usw. und schließlich eine Kodierung "6" einer Drehung von ca. 110°, jeweils ab der Nulllage bis zum Erreichen der Sortierendstellung gemessen. Die Sperrausnehmungen 20 sind demgemäß in einem der jeweiligen Kodierung entsprechenden Winkelabstand von der Sperrstiftaufnahmevertiefung 34 des Zylindergehäuses 12 angeordnet, wenn die Einstellscheiben 16 sich in der Nulllage befinden.

Bei der Kodierung "6" kann eine Zwangskopplung zwischen der entsprechenden Einstellscheibe 16 und dem zugeordneten Abschnitt des Schlüssels 24 vorgesehen sein, d.h. es ist kein Einschnitt bzw. ein Einschnitt mit dem Winkelmaß 0° vorhanden, so dass kein Verdrehspiel zwischen dem Schlüssel 24 und der Einstellscheibe 16 besteht.

Bei der Kodierung "1" besteht hingegen das größtmögliche Verdrehspiel zwischen Schlüssel 24 und Einstellscheibe 16, d.h. an dem Schlüssel 24 ist ein Einschnitt 26 mit einem Winkelmaß von ca. 90° vorgesehen. Eine Einstellscheibe 16 der Kodierung "1" wird somit grundsätzlich erst am Ende der Drehbetätigung des Schlüssels 24, d.h. nach einer Drehung um ca. 90°, mitgenommen und durch eine Drehung des Schlüssels 24 um weitere ca. 20° in ihre Sortierendstellung gebracht.

Ein Scheibenzylinder kann auch eine oder mehrere so genannte Aushebescheiben aufweisen, bei denen es sich in der Regel um Einstellscheiben handelt. Jede Aushebescheibe weist die Kodierung "6" auf und ist in einer vorbestimmten axialen Position im Scheibengehäuse angeordnet, z.B. bezüglich der Schlüsseleinführrichtung ganz vorne, ganz hinten oder in der Mitte des Scheibenzylinders 10. Die als Aushebescheibe fungierende Einstellscheibe ist mit dem Schlüssel 24 zwangsgekoppelt. Bei einer Schlüsselbetätigung in Entriegelungsrichtung dient die Aushebescheibe nach Abschluss der Sortierung (Drehung um 110°) zur Kopplung des Schlüssels 24 mit dem Scheibengehäuse 14 und bewirkt somit eine rotatorische Mitnahme des Scheibengehäuses 14. Ausgehend von der Freigabestellung des Sperrstifts 22 stellt die Aushebescheibe bei einer Schlüsselbetätigung in Verriegelungsrichtung sicher, dass der Sperrstift 22 ordnungsgemäß aus den Sperrausnehmungen 20 der Einstellscheiben 16 angehoben (d.h. in die Sperrstiftaufnahmevertiefung 34 gedrängt) wird und nicht etwa verkantet.

Ferner ist es üblich, zwischen den Einstellscheiben 16 Zwischenscheiben 36 anzuordnen, die mit dem Scheibengehäuse 14 drehfest oder mit Verdrehspiel gekoppelt sind. Die Zwischenscheiben 36 entkoppeln benachbarte Einstellscheiben 16 voneinander, damit die Drehbewegung einer jeweiligen Einstellscheibe 16 nicht reibungsbedingt ein Mitdrehen der hierzu benachbarten Einstellscheibe 16 bewirkt. Ein derartiges Mitnehmen könnte nämlich dazu führen, dass unter Umständen eine Einstellscheibe 16 über ihre Entriegelungsstellung hinaus verdreht wird und sich damit der Scheibenzylinder 10 nicht mehr öffnen lässt.

Die drehfeste Kopplung der Zwischenscheiben 36 mit dem Scheibengehäuse 14 kann durch sich zumindest teilweise in radialer Richtung erstreckende Anschlagabschnitte 40 der Zwischenscheiben 36 erfolgen (Fig. 2), welche an entsprechenden, an der Innenwandung des Scheibengehäuses 14 ausgebildeten Vorsprüngen 42 anliegen. Jede Zwischenscheibe 36 weist eine Umfangsausnehmung 38 auf, die mit dem Sperrstift 22 radial fluchtet. Entsprechend weist jede Zwischenscheibe 36 eine weitere Umfangsausnehmung 38a auf, die mit dem Kernstift 46 radial fluchtet und die bevorzugt der Umfangsausnehmung 38 diametral gegenüberliegt.

Scheibenzylinder der vorstehend beschriebenen Art haben sich als vorteilhaft manipulationssicher erwiesen. Dennoch kann eine unbefugte Person unter Zuhilfenahme eines geeigneten, so genannten Picking-Werkzeugs versuchen, die einzelnen Einstellscheiben nacheinander abzutasten und hierdurch nacheinander zu sortieren, d.h. in die jeweilige Sortierendstellung zu bringen, um anschließend den Scheibenzylinder zu entriegeln. Ferner könnte versucht werden, die erläuterte Kodierung der Einstellscheiben zu erfassen, um einen Schlüssel mit geeigneten Einschnitten nachzubilden. Derartige Picking-Werkzeuge sind in unterschiedlichen Bauformen bekannt, wobei diesen Picking-Werkzeugen gemein ist, dass ihre Spitze entlang der Zylinderachse nacheinander durch die Aufnahmeöffnungen der einzelnen Einstellscheiben geführt wird, um die jeweilige Einstellscheibe in ihre Sortierendstellung zu drehen.

Aus der GB 1 355 188 A ist ein Schlüssel für einen Schließzylinder von der Bauart eines Plättchenzylinders bekannt, dessen Schaft einen Querschnitt aufweist, der entlang einer Längsachse einen ersten Endabschnitt, einen zweiten Endabschnitt und einen Verbindungsabschnitt aufweist, der die beiden Endabschnitte miteinander verbindet, wobei die beiden Endabschnitte einen jeweiligen Kodierungsbereich zum Antreiben einer zugeordneten Plättchenzuhaltung aufweisen, wobei der Verbindungsabschnitt des Schaftquerschnitts schmäler ist als die beiden Endabschnitte und zwei zueinander parallel ausgerichtete Längskanten aufweist, die zwischen den beiden Endabschnitten schräg zu der Längsachse des Schaftquerschnitts verlaufen, wobei der Verbindungsabschnitt des Schaftquerschnitts einen Zentralbereich in der Form eines Quadrats umfasst, wobei die Quadratform zwei einander gegenüberliegende, frei liegende Kanten aufweist, von denen jede einen Teil einer der zwei Längskanten des Verbindungsabschnitts bildet; zwei einander diametral gegenüberliegende Ecken aufweist, von denen jede einem Übergang des Verbindungsabschnitts zu dem jeweiligen Endabschnitt des Schaftquerschnitts entspricht; und zwei weitere einander gegenüberliegende, den Verbindungsabschnitt durchquerende Kanten aufweist, von denen jede sich von einer der zwei genannten Ecken bis zu der der jeweiligen Ecke gegenüberliegenden Längskante des Verbindungsabschnitts erstreckt.

Weitere Schließzylinder mit zugehörigen Schlüsseln sind aus DE 28 17 966 A1, NL 7 012 715 A und WO 2007/147934 A1 bekannt.

Der vorliegenden Erfindung liegt die Aufgabe zugrunde, einen Scheibenzylinder mit einem verbesserten Schutz gegen Manipulationen, wie etwa Picking, anzugeben.

Die Aufgabe wird durch einen Scheibenzylinder mit den Merkmalen des Anspruchs 1 gelöst.

Der Schlüssel oder Schlüsselrohling des erfindungsgemäßen Scheibenzylinders mit mehreren drehbar gelagerten Einstellscheiben besitzt einen Schlüsselschaft mit einem Schaftquerschnitt (bezogen auf eine Orthogonalebene zu der Schlüsselachse), wobei der Schaftquerschnitt entlang einer Längsachse (innerhalb der betrachteten Schnittebene) einen ersten Endabschnitt, einen zweiten Endabschnitt und einen Verbindungsabschnitt aufweist, der den ersten Endabschnitt und den zweiten Endabschnitt miteinander verbindet. Der erste Endabschnitt und der zweite Endabschnitt des Schaftquerschnitts umfassen einen jeweiligen Kodierungsbereich zum Antreiben einer zugeordneten Einstellscheibe (Sortieren der Einstellscheiben nach Aufbrauchen eines jeweiligen Verdrehspiels, wie vorstehend erläutert). Der genannte Verbindungsabschnitt des Schaftquerschnitts ist schmäler ist als die beiden Endabschnitte und weist zwei zueinander parallel ausgerichtete Längskanten auf, die zwischen den beiden Endabschnitten schräg zu der genannten Längsachse des Schaftquerschnitts verlaufen.

Der genannte Verbindungsabschnitt des Schaftquerschnitts umfasst einen Zentralbereich in der Form eines Quadrats, wobei die Quadratform:
- zwei einander gegenüberliegende, frei liegende Kanten aufweist, von denen jede einen Teil einer der zwei Längskanten des Verbindungsabschnitts bildet;
- zwei einander diametral gegenüberliegende Ecken aufweist, von denen jede einem Übergang des Verbindungsabschnitts zu dem jeweiligen Endabschnitt des Schaftquerschnitts entspricht; und
- zwei weitere einander gegenüberliegende, den Verbindungsabschnitt durchquerende Kanten aufweist, von denen jede sich von einer der zwei genannten Ecken bis zu der der jeweiligen Ecke gegenüberliegenden Längskante des Verbindungsabschnitts erstreckt.

Der Schaftquerschnitt des Schlüssels oder Schlüsselrohlings besitzt also einen ersten Endabschnitt und einen zweiten Endabschnitt, um die erforderlichen Kodierungsbereiche bereitzustellen, welche benötigt werden, um gemäß dem Winkelmaß des jeweiligen Einschnitts die Einstellscheiben des Scheibenzylinder in die Sortierendstellung verdrehen zu können. Die zwei Endabschnitte des Schaftquerschnitts sind über einen Verbindungsabschnitt miteinander verbunden, wobei der Schaftquerschnitt hierdurch eine im Wesentlichen rechteckige Grundform aufweisen kann (abgesehen von Rundungen und/oder seitlichen Ausnehmungen, wie nachfolgend noch erläutert). Der erste Endabschnitt, der Verbindungsabschnitt und der zweite Endabschnitt sind entlang einer Längsachse des Schaftquerschnitts angeordnet, wobei die Längsachse in einer Projektion entlang der Schlüsselachse eine Mittenebene des Schlüsselschafts definiert.

Im Rahmen der Erfindung wurde erkannt, dass eine minimale öffnungsweite des Schlüsselkanals des Scheibenzylinders, die einerseits das Einführen und die nachfolgende Verwendung eines Picking-Werkzeugs erschwert und andererseits noch ein ausreichendes Antriebsmoment für die bestimmungsgemäße (d.h. befugte) Öffnungsbetätigung des Scheibenzylinders und des zugeordneten Schlosses ermöglicht, dadurch erreicht werden kann, dass der Verbindungsabschnitt des Schaftquerschnitts schräg zu der Längsachse des Schaftquerschnitts verläuft und in einem Zentralbereich auf eine Quadratform zurückgeführt wird.

Diese Quadratform zeichnet sich dadurch aus, dass ein Paar von einander gegenüberliegenden, frei liegenden ersten Kanten der Quadratform jeweils einen Teil der Längskanten des Verbindungsabschnitts bildet, wobei ein Paar von einander gegenüberliegenden, den Verbindungsabschnitt senkrecht zu den zwei Längskanten durchquerenden zweiten Kanten der Quadratform jeweils gemeinsam mit einer der ersten Kanten der Quadratform zwei (erste) Ecken der Quadratform definieren. Diese zwei (ersten) Ecken der Quadratform liegen einander diametral gegenüber und bilden jeweils einen Übergang des Verbindungsabschnitts zu einem der zwei Endabschnitte des Schaftquerschnitts. Die beiden (gedachten) zweiten Kanten stehen auf den Längskanten des Verbindungsabschnitts senkrecht und definieren dort zwei (zweite) Ecken der Quadratform, die einander diametral gegenüberliegen. Die zwei genannten ersten Ecken der Quadratform befinden sich somit ungefähr an einem Ende einer jeweiligen der zwei Längskanten des Verbindungsabschnitts des Schaftquerschnitts, während die zwei genannten zweiten Ecken der Quadratform ungefähr in einem mittleren Bereich einer jeweiligen der zwei Längskanten des Verbindungsabschnitts angeordnet sind.

Durch diese besondere Geometrie des Schaftquerschnitts des Schlüssels oder Schlüsselrohlings des erfindungsgemäßen Scheibenzylinders ist ein Verbindungsabschnitt zwischen zwei Endabschnitten definiert, der bezüglich der Endabschnitten verschmälert ist, der ferner bezüglich der Längsachse des Schaftquerschnitts schräg ausgerichtet ist, und dessen Erstreckung entlang der Längsachse des Schaftquerschnitts im Übrigen durch die erläuterte Quadratform des Zentralbereichs festgelegt ist, wobei zwei einander diametral gegenüberliegende Ecken der Quadratform den Übergang des Verbindungsabschnitts zu dem jeweiligen Endabschnitt des Schaftquerschnitts festlegen.

Diese besondere Geometrie des Schaftquerschnitts des Schlüssels oder Schlüsselrohlings ermöglicht es nicht nur, die Querschnittsfläche des Schlüsselschafts zu minimieren, sondern es wird auch eine Formgebung bereitgestellt, die das Einführen und Verwenden üblicher Picking-Werkzeuge erheblich erschwert bzw. (hinsichtlich üblicher Picking-Werkzeuge mit länglich-rechteckigem Querschnitt) nahezu ausschließt. Hierfür ist es lediglich erforderlich, dass zumindest ein Element des zugeordneten Scheibenzylinders, beispielsweise eine der Einstellscheiben oder eine an einer Einführöffnung des Schlüsselkanals befindliche Sicherungsscheibe, eine zentrale Schlüsselöffnung mit einem Querschnitt aufweist, der zumindest im Wesentlichen komplementär zu dem Schaftquerschnitt des Schlüssels oder Schlüsselrohlings geformt ist. Zwar kann gleichwohl ein Picking-Werkzeug mit einem länglich-rechteckigen Querschnitt in den Schlüsselkanal eingeführt werden, sofern die Rechteckform der Spitze hinreichend schmal und entsprechend der Schrägstellung des Verbindungsabschnitts des Schaftquerschnitts ausgerichtet ist; da jedoch nicht sämtliche Scheiben des Scheibenzylinders denselben Querschnitt ihrer jeweiligen Schlüsselöffnung aufweisen müssen und insbesondere einige oder sämtliche der Einstellscheiben eine Schlüsselaufnahmeöffnung mit einem anderen und/oder größeren Querschnitt aufweisen können, kann für das Picking-Werkzeug ein Verdrehspiel relativ zu den Einstellscheiben realisiert werden, welches das Abtasten der einzelnen Kodierungen erheblich erschwert.

Vorteilhafte Ausführungsformen der Erfindung sind nachfolgend und in den abhängigen Ansprüchen genannt sowie aus den Zeichnungen ersichtlich.

Vorzugsweise umfasst jeder der beiden Endabschnitte des Schaftquerschnitts des Schlüssels oder Schlüsselrohlings eine erste Seitenkante, eine zweite Seitenkante, die der ersten Seitenkante gegenüberliegt, eine Außenkante und eine Innenkante, die der Außenkante gegenüberliegt und die ausgehend von der ersten Seitenkante zu einer der zwei genannten (ersten) Ecken der Quadratform des Verbindungsabschnitts verläuft. Jede der beiden Längskanten des Verbindungsabschnitts mündet mit einem Ende an ein Ende der genannten Innenkante eines jeweiligen der beiden Endabschnitte des Schaftquerschnitts, um die genannte jeweilige (erste) Ecke der Quadratform zu bilden. Ferner mündet jede der beiden Längskanten des Verbindungsabschnitts mit einem anderen Ende an die zweite Seitenkante des jeweiligen anderen Endabschnitts des Schaftquerschnitts. Hierdurch wird eine "Z"-Form des Schaftquerschnitts gebildet. Die genannte Außenkante des jeweiligen Endabschnitts kann an einer jeweiligen Stirnseite des Schaftquerschnitts in Verlängerung der genannten Längsachse vorgesehen sein und/oder den Kodierungsbereich des jeweiligen Endabschnitts zumindest teilweise begrenzen.

Gemäß einer Ausführungsform sind die erste Seitenkante und die zweite Seitenkante eines jeden der beiden Endabschnitte des Schaftquerschnitts des Schlüssels oder Schlüsselrohlings zumindest im Wesentlichen parallel zueinander ausgerichtet. Alternativ oder zusätzlich können die erste Seitenkante und die zweite Seitenkante geradlinig geformt sein.

Gemäß einer weiteren Ausführungsform besitzt die Außenkante eines jeden der beiden Endabschnitte des Schaftquerschnitts des Schlüssels oder Schlüsselrohlings die Form eines Kreisabschnitts. Hierdurch kann der Schlüsselschaft während einer Drehbewegung in dem zugeordneten Schlüsselkanal entlang der Außenkante formschlüssig geführt werden.

Gemäß einer weiteren Ausführungsform sind die Innenkanten der beiden Endabschnitte des Schaftquerschnitts des Schlüssels oder Schlüsselrohlings zumindest im Wesentlichen senkrecht zu der Längsachse des Schaftquerschnitts ausgerichtet. Alternativ oder zusätzlich können die Innenkanten der beiden Endabschnitte geradlinig geformt sein.

Der Schaftquerschnitt des Schlüssels oder Schlüsselrohlings kann gemäß einer bevorzugten Ausführungsform auf Höhe des Verbindungsabschnitts eine jeweilige Ausnehmung aufweisen, die - bezogen auf eine rechteckige Grundform des Schaftquerschnitts - zumindest im Wesentlichen eine Dreiecksform besitzt, wobei ein erster Schenkel der jeweiligen Dreiecksform die genannte Innenkante eines der beiden Endabschnitte des Schaftquerschnitts bildet, und wobei ein zweiter Schenkel der jeweiligen Dreiecksform eine der beiden Längskanten des Verbindungsabschnitts bildet. Die beiden Dreiecke können entlang der Längsachse des Schaftquerschnitts relativ zueinander versetzt sein, d.h. bei gleicher Größe müssen die entsprechenden Ausnehmungen sich nicht unbedingt auf gleicher Höhe entlang der Längsachse des Schaftquerschnitts befinden.

Auch die Längskanten des Verbindungsabschnitts des Schaftquerschnitts des Schlüssels oder Schlüsselrohlings können gemäß einer bevorzugten Ausführungsform geradlinig geformt sein.

Was die zwei genannten (ersten) Ecken der Quadratform des Verbindungsabschnitts betrifft, welche einen Übergang des Verbindungsabschnitts zu dem jeweiligen Endabschnitt des Schaftquerschnitts bilden, so können diese Ecken der Quadratform des Verbindungsabschnitts bzw. die hierdurch gebildeten Übergänge zwischen dem Verbindungsabschnitt und dem jeweiligen Endabschnitt des Schaftquerschnitt abgerundet sein, um die Fertigung des Schlüsselschafts zu vereinfachen und Kerbspannungen zu verringern. Durch eine gedachte Verlängerung der jeweiligen Kante der Quadratform ist die Position der genannten Ecken der Quadratform an dem Schaftquerschnitt gleichwohl definiert.

Bezüglich der genannten schrägen Ausrichtung des Verbindungsabschnitts relativ zu der Längsachse des Schaftquerschnitts und dementsprechend der schrägen Ausrichtung der genannten Quadratform des Verbindungsabschnitts relativ zu der Längsachse des Schaftquerschnitts ist es bevorzugt, wenn für die schräge Ausrichtung ein Winkel in einem Bereich von ca. 22° bis 32° (jeweils einschließlich) vorgesehen ist (beispielsweise ca. 27°). Durch eine derartige Schrägstellung können ein besonders geeignetes Verhältnis von Breite des (schmalen, jedoch schräg stehenden) Verbindungsabschnitts zu der (Gesamt-) Breite des Schaftquerschnitts und auch ein geeigneter Abstand der beiden Endabschnitte des Schaftquerschnitts voneinander erreicht werden.

Gemäß einer weiteren Ausführungsform kann der genannte jeweilige Übergang des Verbindungsabschnitts zu dem jeweiligen Endabschnitt des Schaftquerschnitts - ausgehend von der zugeordneten Breitseite des Schaftquerschnitts - um einen Wert zurückversetzt (d.h. in Richtung einer Mittenebene versetzt) sein, der ungefähr 40 % der Breite des Schaftquerschnitts beträgt. Hierdurch ergibt sich ein vorteilhaft schmaler Verbindungsabschnitt, der jedoch noch ausreichend stabil mit dem jeweiligen Endabschnitt des Schaftquerschnitts verbunden ist.

Ferner kann gemäß einer vorteilhaften Ausführungsform vorgesehen sein, dass der gegenseitige Abstand der beiden Längskanten des Verbindungsabschnitts des Schaftquerschnitts einen Wert im Bereich von 37 % bis 47 % (jeweils einschließlich), insbesondere ungefähr 40 % bis 44 %, der (Gesamt-) Breite des Schaftquerschnitts beträgt.

Gemäß einer weiteren Ausführungsform kann vorgesehen sein, dass entlang der Längsachse des Schaftquerschnitts betrachtet der erste Endabschnitt, der Verbindungsabschnitt und der zweite Endabschnitt des Schaftquerschnitts sich jeweils entlang ungefähr eines Drittels der Länge bzw. Höhe des Schaftquerschnitts erstrecken. Hierdurch kann bei minimaler Querschnittsfläche des Verbindungsabschnitts eine gute Stabilität zur Übertragung ausreichender Antriebsmomente erreicht werden.

Die Breite des Schaftquerschnitts des Schlüssels oder Schlüsselrohlings kann ungefähr 45 % der Höhe des Schaftquerschnitts betragen.

Vorzugsweise ist der Schaftquerschnitt punktsymmetrisch, damit der Schlüssel bzw. ein aus dem Schlüsselrohling gefertigter Schlüssel als sogenannter Wendeschlüssel in zwei um 180° zueinander versetzten Drehstellungen verwendet werden kann.

Was die genannten Kodierungsbereiche der beiden Endabschnitte des Schaftquerschnitts betrifft, so sind diese vorzugsweise an einer jeweiligen Stirnseite des Schaftquerschnitts in Verlängerung des schräg verlaufenden Verbindungsabschnitts vorgesehen. Mit anderen Worten sollen die Kodierungsbereiche (für das Antreiben der Einstellscheiben in Drehrichtung) zumindest im Wesentlichen in Flucht zu dem länglichen, jedoch schräg verlaufenden Verbindungsabschnitt angeordnet sein. Hierdurch können bezüglich der Drehrichtung zum Sortieren der Einstellscheiben und somit zum Öffnen des dem Scheibenzylinder zugeordneten Schlosses besonders hohe Antriebsmomente übertragen werden, da die auf den Schaftquerschnitt ausgeübte Reaktionskraft entlang der Längsrichtung des Verbindungsabschnitts aufgenommen wird, d.h. die Kraftübertragung erfolgt zumindest im Wesentlichen in Längsrichtung des Verbindungsabschnitts, und nicht etwa in Querrichtung.

Der Schlüsselschaft kann an dem jeweiligen Kodierungsbereich der beiden Endabschnitte des Schaftquerschnitts wenigstens einen Einschnitt aufweisen, der in einem Winkel zu der Längsachse des Schaftquerschnitts verläuft, welcher einen Wert im Bereich von 0° bis 90° (jeweils einschließlich) besitzt. Der jeweilige Einschnitt kann insbesondere an der bereits genannten Außenkante und/oder Seitenkante des jeweiligen Endabschnitts des Schaftquerschnitts gebildet sein.

Die Schlüsselaufnahmeöffnungen der Einstellscheiben des Scheibenzylinders können einen entlang der Zylinderachse verlaufenden Schlüsselkanal bilden, wobei der Scheibenzylinder gemäß einer vorteilhaften Ausführungsform an einer Einführöffnung des Schlüsselkanals wenigstens eine Sicherungsscheibe aufweist, die eine Schlüsseleinführöffnung mit einem Querschnitt aufweist, der zumindest im Wesentlichen komplementär zu dem Schaftquerschnitt des Schlüssels oder Schlüsselrohlings geformt ist. Hierdurch wird an oder nahe der Schlüsseleinführöffnung des Scheibenzylinders eine Querschnittsverengung bereitgestellt, die das Einführen eines Picking-Werkzeugs erschwert.

Bei dieser Ausführungsform ist es möglich, dass die Schlüsselaufnahmeöffnungen der Einstellscheiben (insbesondere sämtlicher Einstellscheiben) einen Querschnitt aufweisen, der anders geformt ist als der Querschnitt der Schlüsseleinführöffnung der Sicherungsscheibe und der beispielsweise zumindest im Wesentlichen die Form eines Rechtecks aufweisen kann. Insbesondere kann der jeweilige Querschnitt der Schlüsselaufnahmeöffnungen der Einstellscheiben zumindest bereichsweise größer sein als der Querschnitt der Schlüsseleinführöffnung der Sicherungsscheibe. Hierdurch kann das erläuterte Abtasten der einzelnen Einstellscheiben erschwert werden, da das Picking-Werkzeug zum einen für das Durchdringen der Sicherungsscheibe relativ klein ausgebildet sein muss und zum anderen für das Abtasten bzw. Sortieren der Einstellscheiben ein Verdrehspiel überwinden muss.

Es ist jedoch nicht zwingend erforderlich, dass der Querschnitt der jeweiligen Schlüsselaufnahmeöffnung sämtlicher Einstellscheiben einen anderen und insbesondere größeren Querschnitt aufweist als der genannte Querschnitt der Schlüsseleinführöffnung der Sicherungsscheibe. Vielmehr kann auch vorgesehen sein, dass (alternativ oder zusätzlich zu der genannten Sicherungsscheibe) eine, oder mehrere, oder sämtliche der Einstellscheiben eine jeweilige Schlüsselaufnahmeöffnung mit einem Querschnitt aufweist/aufweisen, der zumindest im Wesentlichen komplementär zu dem Schaftquerschnitt des Schlüssels oder Schlüsselrohlings geformt ist. Insbesondere kann es ausreichend sein, wenn die Schlüsselaufnahmeöffnung lediglich einer einzigen (vorzugsweise mittleren) Einstellscheibe einen Querschnitt aufweist, der zumindest im Wesentlichen komplementär zu dem Schaftquerschnitt des Schlüssels oder Schlüsselrohlings geformt ist, während alle anderen Einstellscheiben oder sogar alle anderen drehbar gelagerten Scheiben des Scheibenzylinders einen anders geformten und insbesondere rechteckigen Querschnitt der jeweiligen Schlüsselöffnung aufweisen.

Die Erfindung wird nachfolgend lediglich beispielhaft unter Bezugnahme auf die Zeichnungen erläutert, in denen gleiche oder gleichartige Elemente mit denselben Bezugszeichen gekennzeichnet sind.
- Fig. 1: zeigt eine Längsschnittansicht eines Scheibenzylinders mit einem Schlüssel.
- Fig. 2: zeigt eine Explosionsansicht von Teilen des Scheibenzylinders mit Schlüssel gemäß Fig. 1.
- Fig. 3: zeigt einen Schaftquerschnitt eines Schlüssels mit Kodierung "6" oder eines Schlüsselrohlings.
- Fig. 4: zeigt einen Schaftquerschnitt eines Schlüssels mit Kodierung "3".
- Fig. 5: zeigt einen Schaftquerschnitt eines Schlüssels mit Kodierung "1".
- Fig. 6: zeigt eine Sicherungsscheibe eines Scheibenzylinders.

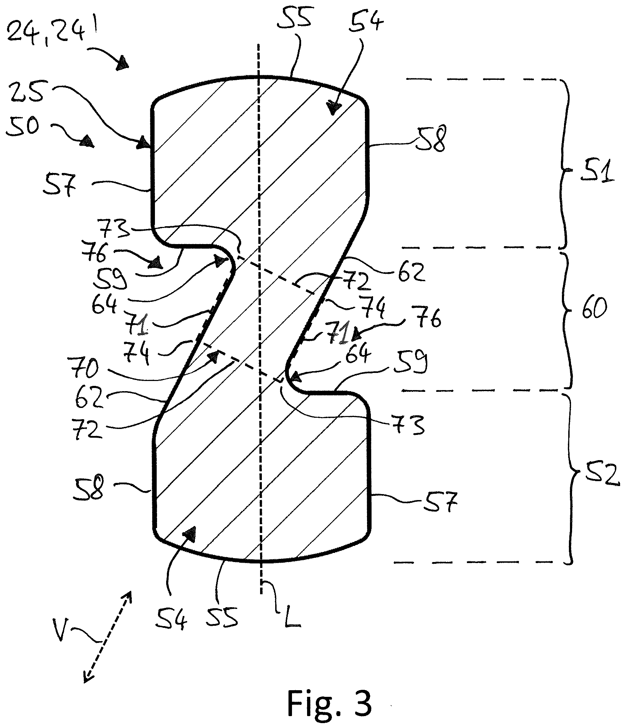

Fig. 3 zeigt einen Querschnitt 50 des Schlüsselschafts 25 eines Schlüssels 24 für einen Scheibenzylinder 10 gemäß Fig. 1 und 2 bzw. einen Querschnitt 50 eines Schlüsselrohlings 24', der zur Herstellung eines Schlüssels 24 dient, wobei der Schaftquerschnitt 50 gemäß Fig. 3 sich von dem Schaftquerschnitt eines Schlüssels 24 gemäß Fig. 1 und 2 unterscheidet, wie nachfolgend erläutert wird. Die Ansicht gemäß Fig. 3 ist derart gewählt, dass der Schlüssel 24 für eine Öffnungsbetätigung des zugeordneten Scheibenzylinders 10 im Uhrzeigersinn gedreht wird.

Der Schaftquerschnitt 50 ist bei dem hier gezeigten Ausführungsbeispiel punktsymmetrisch und weist entlang einer (innerhalb der gezeigten Schnittebene verlaufenden) Längsachse L einen ersten Endabschnitt 51, einen zweiten Endabschnitt 52 und einen Verbindungsabschnitt 60 auf, der den ersten Endabschnitt 51 und den zweiten Endabschnitt 52 miteinander verbindet. Der erste Endabschnitt 51, der zweite Endabschnitt 52 und der Verbindungsabschnitt 60 erstrecken sich bei dem in Fig. 3 gezeigten Ausführungsbeispiel bezüglich der Längsachse L jeweils entlang ungefähr eines Drittels der Länge des Schaftquerschnitts 50.

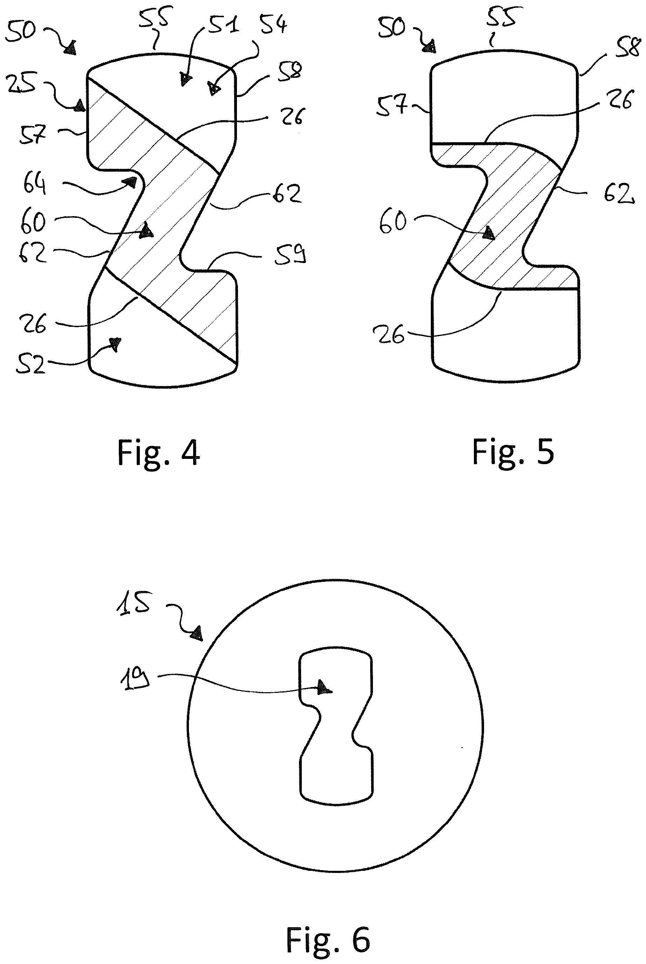

Der erste Endabschnitt 51 und der zweite Endabschnitt 52 bilden in Verlängerung des schräg verlaufenden Verbindungsabschnitts 60 einen jeweiligen Kodierungsbereich 54 zum Antreiben einer zugeordneten Einstellscheibe 16 (Fig. 1 und 2), wobei eine jeweilige Außenkante 55 des Endabschnitts 51, 52 den jeweiligen Kodierungsbereich 54 teilweise begrenzt und jedoch durch einen Einschnitt 26 (Fig. 1 und 2) teilweise oder vollständig zurückversetzt sein kann, wie in Fig. 4 und 5 gezeigt ist. Der Schaftquerschnitt 50 gemäß Fig. 3 besitzt jedoch keinen Einschnitt und entspricht somit einer Kodierung "6" oder einem Schlüsselrohling ohne Einschnitte.

Der Verbindungsabschnitt 60 des Schaftquerschnitts 50 ist schmäler als die beiden Endabschnitte 51, 52 und weist zwei geradlinige, zueinander parallele Längskanten 62 auf, die zwischen den beiden Endabschnitten 51, 52 entlang einer Erstreckungsrichtung V in einem Winkel von beispielsweise ca. 27° oder ca. 31° schräg zu der Längsachse L des Schaftquerschnitts 50 verlaufen. Der gegenseitige Abstand der beiden Längskanten 62 des Verbindungsabschnitts 60 beträgt bei dem in Fig. 3 gezeigten Ausführungsbeispiel ungefähr 40 % der (senkrecht zu der Längsachse L gemessenen) Breite des Schaftquerschnitts 50.

Der Verbindungsabschnitt 60 des Schaftquerschnitts 50 weist einen zentralen Bereich in der Form 70 eines Quadrats auf, welches entsprechend dem genannten schrägen Verlauf des Verbindungsabschnitts 60 relativ zu der Längsachse L verdreht ist. Die Quadratform 70 umfasst zwei einander gegenüberliegende, frei liegende erste Kanten 71, von denen jede einen Teil einer der zwei Längskanten 62 des Verbindungsabschnitts 60 bildet, sowie zwei einander gegenüberliegende, den Verbindungsabschnitt 60 durchquerende zweite Kanten 72. Die zwei zweiten Kanten 72 besitzen dieselbe Länge wie die zwei ersten Kanten 71 und sind orthogonal zu diesen ausgerichtet.

Die Quadratform 70 umfasst ferner zwei einander diametral gegenüberliegende erste Ecken 73, von denen jede einem Übergang 64 des Verbindungsabschnitts 60 zu dem jeweiligen Endabschnitt 51 bzw. 52 des Schaftquerschnitts 50 entspricht, wobei der jeweilige Übergang 64 abgerundet ist, so dass die ersten Ecken 73 der (gedachten) Quadratform 70 nicht exakt mit den tatsächlichen (d.h. physischen) negativen Ecken übereinstimmen, die durch den jeweiligen Übergang 64 gebildet sind. Die zwei ersten Ecken 73 der Quadratform 70 befinden sich somit ungefähr an einem Ende einer jeweiligen der zwei Längskanten 62 des Verbindungsabschnitts 60 des Schaftquerschnitts 50.

Die Quadratform 70 umfasst ferner zwei einander diametral gegenüberliegende zweite Ecken 74, die ungefähr in einem mittleren Bereich einer jeweiligen der zwei Längskanten 62 des Verbindungsabschnitts 60 angeordnet sind. Jede der zwei genannten ersten Kanten 71 erstreckt sich somit von einer der zwei ersten Ecken 73 entlang einer zugeordneten Längskante 62 bis zu einer der zwei zweiten Ecken 74. Jede der zwei genannten zweiten Kanten 72 erstreckt sich von einer der zwei ersten Ecken 73 quer zu dem Verbindungsabschnitt 60 und insbesondere orthogonal zu der genannten Erstreckungsrichtung V bis zu einer der zwei zweiten Ecken 74.

Jeder der beiden Endabschnitte 51, 52 des Schaftquerschnitts 50 umfasst eine erste Seitenkante 57, eine zweite Seitenkante 58, die der ersten Seitenkante 57 bezüglich der (mittigen) Längsachse L gegenüberliegt, wobei die erste Seitenkante 57 und die zweite Seitenkante 58 bei dem hier gezeigten Ausführungsbeispiel parallel zueinander ausgerichtet und geradlinig sind. Die beiden Seitenkanten 57, 58 sind unterschiedlich lang. Jeder der beiden Endabschnitte 51, 52 des Schaftquerschnitts 50 umfasst ferner die bereits genannte Außenkante 55, die bei dem hier gezeigten Ausführungsbeispiel die Form eines Kreisabschnitts aufweist, und eine Innenkante 59, die der Außenkante 55 gegenüberliegt und die ausgehend von der ersten Seitenkante 57 in Richtung der (mittigen) Längsachse L zu einer der zwei genannten ersten Ecken 73 der Quadratform 70 des Verbindungsabschnitts 60 verläuft. Insbesondere kann die jeweilige Innenkante 59 sich, wie in Fig. 3 gezeigt, orthogonal zu der Längsachse L des Schaftquerschnitts 50 erstrecken. Dies ist jedoch nicht zwingend erforderlich; beispielsweise könnte die jeweilige Innenkante 59 bezüglich einer solchen orthogonalen Ausrichtung geneigt sein, insbesondere ähnlich oder entsprechend der Ausrichtung der zweiten Kanten 72 der Quadratform 70.

Entsprechend der erläuterten Schrägstellung des Verbindungsabschnitts 60 und der Quadratform 70 gehen die beiden Längskanten 62 des Verbindungsabschnitts 60 auf unterschiedlicher Höhe (bezogen auf die Längsachse L) in den jeweiligen Endabschnitt 51, 52 des Schaftquerschnitts 50 über. Jede der beiden Längskanten 62 mündet mit einem Ende an ein Ende der Innenkante 59 des jeweiligen Endabschnitts 51, 52, um den genannten jeweiligen Übergang 64 zu bilden. Der jeweilige Übergang 64 des Verbindungsabschnitts 60 zu dem jeweiligen Endabschnitt 51, 52 des Schaftquerschnitts 50 ist bei dem hier gezeigten Ausführungsbeispiel um einen Wert von ungefähr 40 % der (senkrecht zu der Längsachse L gemessenen) Breite des Schaftquerschnitts 50 zurückversetzt. Jede der beiden Längskanten 62 mündet ferner mit dem anderen Ende an die zweite Seitenkante 58 des jeweils anderen Endabschnitts 52 bzw. 51 des Schaftquerschnitts 50.

Um ausgehend von einer zumindest im Wesentlichen rechteckigen Grundform den Schaftquerschnitt 50 mit schräg verlaufendem Verbindungsabschnitt 60 gemäß Fig. 3 zu bilden, weist der Schaftquerschnitt 50 auf Höhe des Verbindungsabschnitts 60 an beiden Längsseiten eine jeweilige Ausnehmung 76 auf, die zumindest im Wesentlichen eine Dreiecksform besitzt, wobei ein erster Schenkel der jeweiligen Dreiecksform die Innenkante 62 eines der beiden Endabschnitte 51, 52 des Schaftquerschnitts 50 bildet, und wobei ein zweiter Schenkel der jeweiligen Dreiecksform eine der beiden Längskanten 62 des Verbindungsabschnitts 60 bildet.

Fig. 4 zeigt einen Schaftquerschnitt 50 eines Schlüssels 24 entsprechend Fig. 3, jedoch an einer Stelle entlang der Schlüsselachse S, an der ein Einschnitt 26 vorgesehen ist, welcher gemäß dem eingangs erläuterten Kodierungssystem die Kodierung "3" repräsentiert. Der an der Außenkante 55, der zweiten Seitenkante 58 und teilweise an der hierzu benachbarten Längskante 62 des Verbindungsabschnitts 60 eingebrachte Einschnitt 26 ist dementsprechend bezüglich der Längsachse L (Fig. 3) um einen Winkel von ca. 36° geneigt.

Fig. 5 zeigt einen entsprechenden Schaftquerschnitt 50 eines Schlüssels 24 an einer Stelle entlang der Schlüsselachse S, an der ein Einschnitt 26 vorgesehen ist, welcher gemäß dem eingangs erläuterten Kodierungssystem die Kodierung "1" repräsentiert. Der an der Außenkante 55, der ersten Seitenkante 57, der zweiten Seitenkante 58 und teilweise an der hierzu benachbarten Längskante 62 des Verbindungsabschnitts 60 eingebrachte Einschnitt 26 ist dementsprechend bezüglich der Längsachse L (Fig. 3) um einen Winkel von ca. 90° geneigt.

Die besondere Geometrie des Schaftquerschnitts 50 gemäß Fig. 3 bis 5 ermöglicht eine minimale Öffnungsweite des Schlüsselkanals 28 (Fig. 1) des Scheibenzylinders 10, die einerseits das Einführen und die nachfolgende Verwendung eines Picking-Werkzeugs erschwert und andererseits noch ein ausreichendes Antriebsmoment für die bestimmungsgemäße Öffnungsbetätigung des Scheibenzylinders 10 zum Antreiben des Kopplungsabschnitts 30 (Fig. 1) ermöglicht. Aufgrund der Ausgestaltung des Verbindungsabschnitts 60, der derart schmal ist und schräg verläuft, dass zwischen den beiden (für das Antreiben der Einstellscheiben 16 erforderlichen) Endabschnitten 51, 52 des Schaftquerschnitts 50 eine entsprechend schräg stehende Quadratform 70 gebildet wird, wird die Querschnittsfläche des Schlüsselschafts 25 minimiert, wodurch das Einführen und Verwenden üblicher Picking-Werkzeuge erheblich erschwert bzw. (hinsichtlich üblicher Picking-Werkzeuge mit länglich-rechteckigem Querschnitt) nahezu ausgeschlossen wird.

Gleichwohl kann ein ausreichend hohes Antriebsmoment auf die Einstellscheiben 16 aufgebracht werden, da der jeweilige Kodierungsbereich 54 der Endabschnitte 51, 52 in Verlängerung des schräg ausgerichteten Verbindungsabschnitts 60 vorgesehen ist, wodurch die an dem Schlüsselschaft 25 auftretenden Reaktionskräfte entlang der Erstreckungsrichtung V des Verbindungsabschnitts 60 aufgenommen und verteilt werden können. Besonders gut ist dies anhand von Fig. 4 (Kodierung "3") ersichtlich: Wenn bei einer Drehbewegung des Schlüsselschafts 25 im Uhrzeigersinn der Einschnitt 26 eine Einstellscheibe 16 (Fig. 1 und 2) beaufschlagt und hierüber den Kopplungsabschnitt 30 antreibt, wird die Reaktionkraft von der Quadratform 70 (Fig. 3) des Verbindungsabschnitts 60 aufgenommen und abgestützt.

Fig. 6 zeigt eine Sicherungsscheibe 15, die an einer Einführöffnung des Schlüsselkanals 28 eines Scheibenzylinders 10 (Fig. 1 und 2) vorgesehen ist. Die Sicherungsscheibe 15 besitzt eine zentrale Schlüsseleinführöffnung 19 mit einem Querschnitt, der zumindest im Wesentlichen komplementär zu dem Schaftquerschnitt 50 des Schlüssels 24 (Kodierung "6" gemäß Fig. 3) oder Schlüsselrohlings 24' geformt ist. Um das Einführen des Schlüssels 24 in den Schlüsselkanal 28 des Scheibenzylinders 10 zu erleichtern, kann der Querschnitt der Schlüsseleinführöffnung 19 etwas größer und deutlicher abgerundet sein als der Schaftquerschnitt 50. Durch eine derartige Sicherungsscheibe 15 wird die Öffnungsweite des Schlüsselkanals 28 des Scheibenzylinders 10 begrenzt, um wie erläutert das Einführen eines Picking-Werkzeugs zu erschweren.

Alternativ oder zusätzlich können auch eine oder mehrere Einstellscheiben 16 oder sonstige Scheiben des Scheibenzylinders 10 (z.B. Aushebescheibe) eine Aufnahmeöffnung 18 aufweisen, deren Querschnitt zumindest im Wesentlichen komplementär zu dem Schaftquerschnitt 50 des Schlüssels 24 oder Schlüsselrohlings 24' geformt ist.

### Bezugszeichenliste

- 10: Scheibenzylinder
- 12: Zylindergehäuse
- 14: Scheibengehäuse
- 15: Sicherungsscheibe
- 16: Einstellscheibe
- 18: Aufnahmeöffnung
- 19: Schlüsseleinführöffnung
- 20: Sperrausnehmung
- 22: Sperrstift
- 24: Schlüssel
- 24': Schlüsselrohling
- 25: Schlüsselschaft
- 26: Einschnitt
- 28: Schlüsselkanal
- 30: Kopplungsabschnitt
- 32: Schlitz
- 34: Sperrstiftaufnahmevertiefung
- 36: Zwischenscheibe
- 38, 38a: Umfangsausnehmung
- 40: Anschlagabschnitt
- 42: Vorsprung
- 44: Fixierausnehmung
- 46: Kernstift
- 50: Schaftquerschnitt
- 51: erster Endabschnitt
- 52: zweiter Endabschnitt
- 54: Kodierungsbereich
- 55: Außenkante
- 57: erste Seiten kante
- 58: zweite Seiten kante
- 59: Innenkante
- 60: Verbindungsabschnitt
- 62: Längskante des Verbindungsabschnitts
- 64: Übergang zwischen Verbindungsabschnitt und Endabschnitt
- 70: Quadratform
- 71: erste Kante der Quadratform
- 72: zweite Kante der Quadratform
- 73: erste Ecke der Quadratform
- 74: zweite Ecke der Quadratform
- 76: Ausnehmung

- L: Längsachse des Schaftquerschnitts
- S: Schlüsselachse
- V: Erstreckungsrichtung des Verbindungsabschnitts
- Z: Zylinderachse

## Patentansprüche

1. Scheibenzylinder (10), mit:
- einem Zylindergehäuse (12);
- einem im Zylindergehäuse (12) um eine Zylinderachse drehbar gelagerten Scheibengehäuse (14);
- wenigstens einem am Außenumfang des Scheibengehäuses (14) vorgesehenen, parallel zur Zylinderachse (Z) ausgerichteten und radial zur Zylinderachse (Z) versetzbaren Sperrstift (22), welcher in einer radial äußeren Blockierstellung das Scheibengehäuse 14 gegen eine Drehbewegung blockiert und in einer radial inneren Freigabestellung das Scheibengehäuse (14) für eine Drehbewegung freigibt; und
- mehreren im Scheibengehäuse (14) entlang der Zylinderachse (Z) angeordneten, zwischen einer Verriegelungsstellung und einer Entriegelungsstellung drehbar gelagerten Einstellscheiben (16), wobei jede Einstellscheibe (16) eine Schlüsselaufnahmeöffnung (18) und am Außenumfang wenigstens eine Sperrausnehmung (20) aufweist, in welcher der Sperrstift (22) in der Freigabestellung zumindest teilweise aufnehmbar ist, wobei der Sperrstift (22) nur dann in die Freigabestellung versetzbar ist, wenn sich alle Einstellscheiben (16) in ihrer Entriegelungsstellung befinden, in welcher die Sperrausnehmung (20) der jeweiligen Einstellscheibe (16) radial zu dem Sperrstift (22) ausgerichtet ist;
sowie mit einem
- Schlüssel (24) oder Schlüsselrohling (24'), wobei der Schlüssel (24) oder Schlüsselrohling (24') einen Schlüsselschaft (25) mit einem Schaftquerschnitt (50) aufweist, der entlang einer Längsachse (L) einen ersten Endabschnitt (51), einen zweiten Endabschnitt (52) und einen Verbindungsabschnitt (60) aufweist, der den ersten Endabschnitt (51) und den zweiten Endabschnitt (52) miteinander verbindet, wobei der erste Endabschnitt (51) und der zweite Endabschnitt (52) einen jeweiligen Kodierungsbereich (54) zum Antreiben einer zugeordneten Einstellscheibe (16) aufweisen,
wobei der Verbindungsabschnitt (60) des Schaftquerschnitts (50) schmäler ist als die beiden Endabschnitte (51, 52) und zwei zueinander parallel ausgerichtete Längskanten (62) aufweist, die zwischen den beiden Endabschnitten (51, 52) schräg zu der Längsachse (L) des Schaftquerschnitts (50) verlaufen,
wobei der Verbindungsabschnitt (60) des Schaftquerschnitts (50) einen Zentralbereich in der Form (70) eines Quadrats umfasst, wobei die Quadratform (70):
- zwei einander gegenüberliegende, frei liegende Kanten (71) aufweist, von denen jede einen Teil einer der zwei Längskanten (62) des Verbindungsabschnitts (60) bildet;
- zwei einander diametral gegenüberliegende Ecken (73) aufweist, von denen jede einem Übergang (64) des Verbindungsabschnitts (60) zu dem jeweiligen Endabschnitt des Schaftquerschnitts (50) entspricht; und
- zwei weitere einander gegenüberliegende, den Verbindungsabschnitt (60) durchquerende Kanten (72) aufweist, von denen jede sich von einer der zwei genannten Ecken (73) bis zu der der jeweiligen Ecke gegenüberliegenden Längskante (62) des Verbindungsabschnitts (60) erstreckt.

2. Scheibenzylinder (10) nach Anspruch 1, wobei jeder der beiden Endabschnitte (51, 52) des Schaftquerschnitts (50) des Schlüssels (24) oder Schlüsselrohlings (24') eine erste Seitenkante (57), eine zweite Seitenkante (58), die der ersten Seitenkante (57) gegenüberliegt, eine Außenkante (55) und eine Innenkante (59) aufweist, die der Außenkante (55) gegenüberliegt und die ausgehend von der ersten Seitenkante (57) zu einer der zwei genannten Ecken (73) der Quadratform (70) des Verbindungsabschnitts (60) verläuft,
wobei jede der zwei Längskanten (62) des Verbindungsabschnitts (60) mit einem Ende an ein Ende der Innenkante (59) eines jeweiligen der beiden Endabschnitte (51, 52) des Schaftquerschnitts (50) mündet, um die genannte jeweilige Ecke (73) der Quadratform (70) zu bilden, und
wobei jede der zwei Längskanten (62) des Verbindungsabschnitts (60) mit einem anderen Ende an die zweite Seitenkante (58) des jeweiligen anderen Endabschnitts (52 bzw. 51) des Schaftquerschnitts (50) mündet.

3. Scheibenzylinder (10) nach Anspruch 2, wobei die erste Seitenkante (57) und die zweite Seitenkante (58) eines jeden der beiden Endabschnitte (51, 52) des Schaftquerschnitts (50) zumindest im Wesentlichen parallel zueinander ausgerichtet und/oder geradlinig sind.

4. Scheibenzylinder (10) nach Anspruch 2 oder 3, wobei die Außenkante (55) eines jeden der beiden Endabschnitte (51, 52) des Schaftquerschnitts (50) des Schlüssels (24) oder Schlüsselrohlings (24') die Form eines Kreisabschnitts aufweist.

5. Scheibenzylinder (10) nach einem der Ansprüche 2 bis 4, wobei die Innenkanten (59) der beiden Endabschnitte (51, 52) des Schaftquerschnitts (50) des Schlüssels (24) oder Schlüsselrohlings (24') zumindest im Wesentlichen senkrecht zu der Längsachse (L) des Schaftquerschnitts (50) ausgerichtet und/oder geradlinig sind.

6. Scheibenzylinder (10) nach einem der Ansprüche 2 bis 5, wobei der Schaftquerschnitt (50) des Schlüssels (24) oder Schlüsselrohlings (24') auf Höhe des Verbindungsabschnitts (60) eine jeweilige Ausnehmung (76) aufweist, die zumindest im Wesentlichen eine Dreiecksform besitzt, wobei ein erster Schenkel der jeweiligen Dreiecksform die Innenkante (59) eines der beiden Endabschnitte (51, 52) des Schaftquerschnitts (50) bildet, und wobei ein zweiter Schenkel der jeweiligen Dreiecksform eine der zwei Längskanten (62) des Verbindungsabschnitts (60) bildet.

7. Scheibenzylinder (10) nach einem der vorherigen Ansprüche, wobei die Längskanten (62) des Verbindungsabschnitts (60) geradlinig sind.

8. Scheibenzylinder (10) nach einem der vorherigen Ansprüche, wobei die den zwei genannten Ecken (73) der Quadratform (70) entsprechenden Übergänge (64) des Verbindungsabschnitts (60) zu dem jeweiligen Endabschnitt des Schaftquerschnitts (50) des Schlüssels (24) oder Schlüsselrohlings (24') abgerundet sind.

9. Scheibenzylinder (10) nach einem der vorherigen Ansprüche, wobei die Quadratform (70) des Verbindungsabschnitts (60) relativ zu der Längsachse (L) des Schaftquerschnitts (50) des Schlüssels (24) oder Schlüsselrohlings (24') um einen Winkel verdreht ist, welcher einen Wert im Bereich von 22° bis 32° besitzt.

10. Scheibenzylinder (10) nach einem der vorherigen Ansprüche, wobei der genannte jeweilige Übergang (64) des Verbindungsabschnitts (60) zu dem jeweiligen Endabschnitt des Schaftquerschnitts (50) des Schlüssels (24) oder Schlüsselrohlings (24') um einen Wert von ungefähr 40 % der Breite des Schaftquerschnitts (50) zurückversetzt ist;
und/oder
wobei der gegenseitige Abstand der zwei Längskanten (62) des Verbindungsabschnitts (60) des Schaftquerschnitts (50) einen Wert im Bereich von 37 % bis 47 % der Breite des Schaftquerschnitts (50) beträgt.

11. Scheibenzylinder (10) nach einem der vorherigen Ansprüche, wobei der erste Endabschnitt, der Verbindungsabschnitt (60) und der zweite Endabschnitt des Schaftquerschnitts (50) des Schlüssels (24) oder Schlüsselrohlings (24') sich bezüglich der Längsachse (L) des Schaftquerschnitts (50) jeweils entlang ungefähr eines Drittels der Länge des Schaftquerschnitts (50) erstrecken.

12. Scheibenzylinder (10) nach einem der vorherigen Ansprüche, wobei der Schaftquerschnitt (50) des Schlüssels (24) oder Schlüsselrohlings (24') punktsymmetrisch ist.

13. Scheibenzylinder (10) nach einem der vorherigen Ansprüche, wobei der jeweilige Kodierungsbereich (54) der beiden Endabschnitte (51, 52) des Schaftquerschnitts (50) des Schlüssels (24) oder Schlüsselrohlings (24') an einer jeweiligen Stirnseite des Schaftquerschnitts (50) in Verlängerung des schräg verlaufenden Verbindungsabschnitts (60) vorgesehen ist;
und/oder
wobei der Schlüsselschaft (25) an dem jeweiligen Kodierungsbereich (54) der beiden Endabschnitte (51, 52) des Schaftquerschnitts (50) wenigstens einen Einschnitt (26) aufweist, der in einem Winkel zu der Längsachse (L) verläuft, welcher einen Wert im Bereich von 0° bis 90° besitzt.

14. Scheibenzylinder (10) nach einem der vorherigen Ansprüche, wobei die Schlüsselaufnahmeöffnungen (18) der Einstellscheiben (16) einen entlang der Zylinderachse (Z) verlaufenden Schlüsselkanal (28) bilden, wobei der Scheibenzylinder (10) an einer Einführöffnung des Schlüsselkanals (28) wenigstens eine Sicherungsscheibe (15) aufweist, die eine Schlüsseleinführöffnung (19) mit einem Querschnitt aufweist, der zumindest im Wesentlichen komplementär zu dem Schaftquerschnitt (50) des Schlüssels (24) oder Schlüsselrohlings (24') geformt ist;
und/oder
wobei wenigstens eine der mehreren Einstellscheiben (16) eine Schlüsselaufnahmeöffnung (18) mit einem Querschnitt aufweist, der zumindest im Wesentlichen komplementär zu dem Schaftquerschnitt (50) des Schlüssels (24) oder Schlüsselrohlings (24') geformt ist.

## Claims

1. A disk cylinder (10) having:
- a cylinder housing (12);
- a disk housing (14) rotatably supported about a cylinder axis in the cylinder housing (12);
- at least one blocking pin (22) which is provided at the outer periphery of the disk housing (14), which is aligned in parallel with the cylinder axis (Z) and is displaceable radially to the cylinder axis (Z), which blocks the disk housing (14) against a rotational movement in a radially outer blocking position and releases the disk housing (14) for a rotational movement in a radially inner release position; and
- a plurality of disk tumblers (16) arranged along the cylinder axis (Z) in the disk housing (14) and rotatably supported between a locked position and an unlocked position, with each disk tumbler (16) having a key reception opening (18) and, at the outer periphery, at least one blocking cut-out (20) in which the blocking pin (22) is at least partly receivable in the release position, with the blocking pin (22) only being displaceable into the release position when all the disk tumblers (16) are in their unlocked positions in which the blocking cut-out (20) of the respective disk tumbler (16) is aligned radially to the blocking pin (22);
as well as having
- a key (24) or a key blank (24'), wherein the key (24) or the key blank (24') has a key shaft (25) having a shaft cross-section (50) which has a first end section (51), a second end section (52) and a connection section (60) along a longitudinal axis (L), said connection section (60) connecting the first end section (51) and the second end section (52) to one another, with the first end section (51) and the second end section (52) having a respective encoding region (54) for driving an associated disk tumbler (16),
wherein the connection section (60) of the shaft cross-section (50) is narrower than the two end sections (51, 52) and has two longitudinal edges (62) which are aligned in parallel with one another and which extend between the two end sections (51, 52) obliquely to the longitudinal axis (L) of the shaft cross-section (50); and
wherein the connection section (60) of the shaft cross-section (50) comprises a central region that has a square shape (70), with the square shape (70):
- having two exposed edges (71) which are disposed opposite one another and of which each forms a part of one of the two longitudinal edges (62) of the connection section (60);
- having two corners (73) which are disposed diametrically opposite one another and of which each corresponds to a transition (64) of the connection section (60) to the respective end section of the shaft cross-section (50); and
- having two further edges (72) which are disposed opposite one another, which pass through the connection section (60) and of which each extends from one of said two corners (73) up to the longitudinal edge (62) of the connection section (60) disposed opposite the respective corner.

2. A disk cylinder (10) in accordance with claim 1, wherein each of the two end sections (51, 52) of the shaft cross-section (50) of the key (24) or of the key blank (24') has a first side edge (57), a second side edge (58) which is disposed opposite the first side edge (57), an outer edge (55) and an inner edge (59) which is disposed opposite the outer edge (55) and which extends, starting from the first side edge (57), to one of said two corners (73) of the square shape (70) of the connection section (60);
wherein one end of each of the two longitudinal edges (62) of the connection section (60) leads to an end of the inner edge (59) of a respective one of the two end sections (51, 52) of the shaft cross-section (50) to form said respective corner (73) of the square shape (70); and
wherein another end of each of the two longitudinal edges (62) of the connection section (60) leads to the second side edge (58) of the respective other end section (52 or 51) of the shaft cross-section (50).

3. A disk cylinder (10) in accordance with claim 2, wherein the first side edge (57) and the second side edge (58) of each of the two end sections (51, 52) of the shaft cross-section (50) are aligned at least substantially in parallel with one another and/or are rectilinear.

4. A disk cylinder (10) in accordance with claim 2 or claim 3, wherein the outer edge (55) of each of the two end sections (51, 52) of the shaft cross-section (50) of the key (24) or of the key blank (24') has the shape of a circular section.

5. A disk cylinder (10) in accordance with any one of the claims 2 to 4, wherein the inner edges (59) of the two end sections (51, 52) of the shaft cross-section (50) of the key (24) or of the key blank (24') are at least substantially aligned perpendicular to the longitudinal axis (L) of the shaft cross-section (50) and/or are rectilinear.

6. A disk cylinder (10) in accordance with any one of the claims 2 to 5, wherein the shaft cross-section (50) of the key (24) or of the key blank (24') has a respective cut-out (76) at the level of the connection section (60), said cut-out (76) at least substantially having a triangular shape, with a first limb of the respective triangular shape forming the inner edge (59) of one of the two end sections (51, 52) of the shaft cross-section (50), and with a second limb of the respective triangular shape forming one of the two longitudinal edges (62) of the connection section (60).

7. A disk cylinder (10) in accordance with any one of the preceding claims,
wherein the longitudinal edges (62) of the connection section (60) are rectilinear.

8. A disk cylinder (10) in accordance with any one of the preceding claims,
wherein the transitions (64) of the connection section (60) to the respective end section of the shaft cross-section (50) of the key (24) or of the key blank (24') which correspond to said two corners (73) of the square shape (70) are rounded.

9. A disk cylinder (10) in accordance with any one of the preceding claims,
wherein the square shape (70) of the connection section (60) is rotated relative to the longitudinal axis (L) of the shaft cross-section (50) of the key (24) or of the key blank (24') by an angle that has a value in the range from 22° to 32°.

10. A disk cylinder (10) in accordance with any one of the preceding claims,
wherein said respective transition (64) of the connection section (60) to the respective end section of the shaft cross-section (50) of the key (24) or of the key blank (24') is set back by a value of approximately 40% of the width of the shaft cross-section (50);
and/or
wherein the mutual spacing of the two longitudinal edges (62) of the connection section (60) of the shaft cross-section (50) amounts to a value in the range from 37% to 47% of the width of the shaft cross-section (50).

11. A disk cylinder (10) in accordance with any one of the preceding claims,
wherein the first end section, the connection section (60) and the second end section of the shaft cross-section (50) of the key (24) or of the key blank (24') each extend along approximately a third of the length of the shaft cross-section (50) with respect to the longitudinal axis (L) of the shaft cross-section (50).

12. A disk cylinder (10) in accordance with any one of the preceding claims,
wherein the shaft cross-section (50) of the key (24) or of the key blank (24') is point symmetric.

13. A disk cylinder (10) in accordance with any one of the preceding claims,
wherein the respective encoding region (54) of the two end sections (51, 52) of the shaft cross-section (50) of the key (24) or of the key blank (24') is provided at a respective end face of the shaft cross-section (50) in extension of the obliquely extending connection section (60);
and/or
wherein the key shaft (25) has at least one incision (26) at the respective encoding region (54) of the two end sections (51, 52) of the shaft cross-section (50), said incision (26) extending at an angle to the longitudinal axis (L) that has a value in the range from 0° to 90°.

14. A disk cylinder (10) in accordance with any one of the preceding claims,
wherein the key reception openings (18) of the disk tumblers (16) form a keyway (28) extending along the cylinder axis (Z); wherein the disk cylinder (10) has at least one securing disk (15) at an insertion opening of the keyway (28), said securing disk (15) having a key insertion opening (19) having a cross-section which is formed at least substantially in a complementary manner to the shaft cross-section (50) of the key (24) or of the key blank (24');
and/or
wherein at least one of the plurality of disk tumblers (16) has a key reception opening (18) having a cross-section which is formed at least substantially in a complementary manner to the shaft cross-section (50) of the key (24) or of the key blank (24').

## Revendications

1. Cylindre à disques (10), comportant
- un boîtier de cylindre (12) ;
- un boîtier de disque (14) monté mobile en rotation autour d'un axe de cylindre dans le boîtier de cylindre (12) ;
- au moins une tige de blocage (22) prévue à la périphérie extérieure du boîtier de disque (14), orientée parallèlement à l'axe de cylindre (Z) et susceptible d'être décalée radialement par rapport à l'axe de cylindre (Z), tige qui, dans une position de blocage radialement extérieure, bloque le boîtier de disque (14) à l'encontre d'un mouvement de rotation et qui, dans une position de libération radialement intérieure, libère le boîtier de disque (14) en vue d'un mouvement de rotation ; et
- plusieurs disques de réglage (16) agencés dans le boîtier de disque (14) le long de l'axe de cylindre (Z) et montés mobiles en rotation entre une position de verrouillage et une position de déverrouillage, chaque disque de réglage (16) présentant une ouverture de réception de clé (18) et à la périphérie extérieure au moins un évidement de blocage (20) permettant de recevoir au moins partiellement la tige de blocage (22) dans la position de libération, la tige de blocage (22) pouvant être décalée jusque dans la position de libération uniquement lorsque tous les disques de réglage (16) se trouvent dans leur position de déverrouillage dans laquelle l'évidement de blocage (20) du disque de réglage respectif (16) est orienté radialement par rapport à la tige de blocage (22) ; et
- une clé (24) ou une ébauche de clé (24'), la clé (24) ou l'ébauche de clé (24') comprenant une tige de clé (25) ayant une section transversale de tige (50) qui présente, le long d'un axe longitudinal (L), une première portion d'extrémité (51), une seconde portion d'extrémité (52) et une portion de liaison (60) qui relie mutuellement la première portion d'extrémité (51) et la seconde portion d'extrémité (52), la première portion d'extrémité (51) et la seconde portion d'extrémité (52) présentant chacune une zone de codage respective (54) pour entraîner un disque de réglage associé (16),
dans lequel
la portion de liaison (60) de la section transversale de tige (50) est plus étroite que les deux portions d'extrémité (51, 52) et comprend deux arêtes longitudinales (62) qui sont orientées parallèlement l'une à l'autre et qui s'étendent entre les deux portions d'extrémité (51, 52) en oblique par rapport à l'axe longitudinal (L) de la section transversale de tige (50),
la portion de liaison (60) de la section transversale de tige (50) comprend une zone centrale en forme de carré (70), et la forme carrée (70) présente :
- deux arêtes (71) opposées l'une à l'autre et disposées à découvert, dont chacune constitue une partie de l'une des deux arêtes longitudinales (62) de la portion de liaison (60) ;
- deux coins (73) diamétralement opposés l'un à l'autre, dont chacun correspond à une transition (64) de la portion de liaison (60) vers la portion d'extrémité respective de la section transversale de tige (50) ; et
- deux autres arêtes (72) opposées l'une à l'autre et traversant la portion de liaison (60), dont chacune s'étend depuis l'un desdits deux coins (73) jusqu'à l'arête longitudinale (62), opposée au coin respectif, de la portion de liaison (60).

2. Cylindre à disques (10) selon la revendication 1,
dans lequel
chacune des deux portions d'extrémité (51, 52) de la section transversale de tige (50) de la clé (24) ou de l'ébauche de clé (24') comprend une première arête latérale (57), une seconde arête latérale (58) opposée à la première arête latérale (57), une arête extérieure (55) et une arête intérieure (59) opposée à l'arête extérieure (55) et s'étendant depuis la première arête latérale (57) jusqu'à l'un desdits deux coins (73) de la forme carrée (70) de la portion de liaison (60),
chacune des deux arêtes latérales (62) de la portion de liaison (60) débouche par une extrémité au niveau d'une extrémité de l'arête intérieure (59) d'une portion respective des deux portions d'extrémité (51, 52) de la section transversale de tige (50) pour constituer ledit coin respectif (73) de la forme carrée (70), et
chacune des deux arêtes latérales (62) de la portion de liaison (60) débouche par l'autre extrémité au niveau de la seconde arête latérale (58) de l'autre portion d'extrémité respective (52 ou 51) de la section transversale de tige (50).

3. Cylindre à disques (10) selon la revendication 2,
dans lequel
la première arête latérale (57) et la seconde arête latérale (58) de chacune des deux portions d'extrémité (51, 52) de la section transversale de tige (50) sont orientées au moins sensiblement parallèlement l'une à l'autre et/ou sont rectilignes.

4. Cylindre à disques (10) selon la revendication 2 ou 3,
dans lequel
l'arête extérieure (55) de chacune des deux portions d'extrémité (51, 52) de la section transversale de tige (50) de la clé (24) ou de l'ébauche de clé (24') présente la forme d'un segment de cercle.

5. Cylindre à disques (10) selon l'une des revendications 2 à 4,
dans lequel
les arêtes intérieures (59) des deux portions d'extrémité (51, 52) de la section transversale de tige (50) de la clé (24) ou de l'ébauche de clé (24') sont orientées au moins sensiblement perpendiculairement à l'axe longitudinal (L) de la section transversale de tige (50) et/ou sont rectilignes.

6. Cylindre à disques (10) selon l'une des revendications 2 à 5,
dans lequel
au niveau de la portion de liaison (60), la section transversale de tige (50) de la clé (24) ou de l'ébauche de clé (24') présente un évidement respectif (76) qui possède au moins sensiblement une forme triangulaire, un premier côté de la forme triangulaire respective constituant l'arête intérieure (59) de l'une des deux portions d'extrémité (51, 52) de la section transversale de tige (50), et un second côté de la forme triangulaire respective constituant l'une des deux arêtes longitudinales (62) de la portion de liaison (60).

7. Cylindre à disques (10) selon l'une des revendications précédentes,
dans lequel
les arêtes longitudinales (62) de la portion de liaison (60) sont rectilignes.

8. Cylindre à disques (10) selon l'une des revendications précédentes,
dans lequel
les transitions (64) de la portion de liaison (60) vers la portion d'extrémité respective de la section transversale de tige (50) de la clé (24) ou de l'ébauche de clé (24'), qui correspondent auxdits deux coins (73) de la forme carrée (70) sont arrondies.

9. Cylindre à disques (10) selon l'une des revendications précédentes,
dans lequel
la forme carrée (70) de la portion de liaison (60) est tournée d'un angle par rapport à l'axe longitudinal (L) de la section transversale de tige (50) de la clé (24) ou de l'ébauche de clé (24'), ledit angle étant dans la plage de 22° à 32°.

10. Cylindre à disques (10) selon l'une des revendications précédentes,
dans lequel
ladite transition respective (64) de la portion de liaison (60) vers la portion d'extrémité respective de la section transversale de tige (50) de la clé (24) ou de l'ébauche de clé (24') est décalée en retrait d'une valeur d'environ 40 % de la largeur de la section transversale de tige (50) ;
et/ou
la distance mutuelle des deux arêtes longitudinales (62) de la portion de liaison (60) de la section transversale de tige (50) présente une valeur dans la plage de 37 % à 47 % de la largeur de la section transversale de tige (50).

11. Cylindre à disques (10) selon l'une des revendications précédentes,
dans lequel
la première portion d'extrémité, la portion de liaison (60) et la seconde portion d'extrémité de la section transversale de tige (50) de la clé (24) ou de l'ébauche de clé (24') s'étendent chacune le long d'environ un tiers de la longueur de la section transversale de tige (50) par rapport à l'axe longitudinal (L) de la section transversale de tige (50).

12. Cylindre à disques (10) selon l'une des revendications précédentes,
dans lequel
la section transversale de tige (50) de la clé (24) ou de l'ébauche de clé (24') est à symétrie ponctuelle.

13. Cylindre à disques (10) selon l'une des revendications précédentes,
dans lequel
la zone de codage respective (54) des deux portions d'extrémité (51, 52) de la section transversale de tige (50) de la clé (24) ou de l'ébauche de clé (24') est prévue sur une face frontale respective de la section transversale de tige (50) en prolongement de la portion de liaison (60) s'étendant en oblique ;
et/ou
au niveau de la zone de codage respective (54) des deux portions d'extrémité (51, 52) de la section transversale de tige (50), la tige de clé (25) comprend au moins une entaille (26) qui s'étend sous un angle par rapport à l'axe longitudinal (L), qui présente une valeur dans la plage de 0° à 90°.

14. Cylindre à disques (10) selon l'une des revendications précédentes,
dans lequel
les ouvertures de réception de clé (18) des disques de réglage (16) constituent un canal à clé (28) s'étendant le long de l'axe de cylindre (Z), le cylindre à disques (10) comprenant au moins un disque de blocage (15) au niveau d'une ouverture d'introduction du canal à clé (28), disque qui présente une ouverture d'introduction de clé (19) ayant une section transversale qui est formée au moins sensiblement de façon complémentaire à la section transversale de tige (50) de la clé (24) ou de l'ébauche de clé (24') ;
et/ou
l'un au moins desdits plusieurs disques de réglage (16) présente une ouverture de réception de clé (18) ayant une section transversale qui est formée au moins sensiblement de façon complémentaire à la section transversale de tige (50) de la clé (24) ou de l'ébauche de clé (24').
